# EUROPÄISCHE PATENTSCHRIFT

(11) **EP 1 355 517 B1**
(45) Veröffentlichungstag und Bekanntmachung des Hinweises auf die Patenterteilung: **01.03.2006**
(21) Anmeldenummer: 03007615.2
(22) Anmeldetag: 02.04.2003
(51) Int. Cl.: H05B 41/288

(54) **Taktkonverter mit akustischer Taktfrequenz**
Switched converter with acoustic switching frequency
Convertisseur avec découpage à fréquence acoustique

(30) Priorität: 15.04.2002 DE 10216596
(43) Veröffentlichungstag der Anmeldung: 22.10.2003
(73) Patentinhaber: Patent-Treuhand-Gesellschaft für elektrische Glühlampen mbH, 81543 München (DE)
(72) Erfinder: Huber, Andreas, 82216 Maisach (DE); Kästle, Herbert, 83278 Traunstein (DE); Limmer, Walter, 80337 München (DE); Niedermeier, Peter, 80995 München (DE)
(74) Vertreter: Raiser, Franz

(56) Entgegenhaltungen:
- US-A- 3 890 537
- US-A- 4 904 907
- US-A- 5 491 386
- US-A- 5 623 187
- US-B1- 6 184 633

## Beschreibung

### Technisches Gebiet

Die Erfindung geht aus von einem Beleuchtungssystem gemäß dem Oberbegriff des Anspruchs 1. Es handelt sich dabei insbesondere um die Anregung akustischer Resonanzen in einer Hochdruck-Entladungslampe durch kostengünstige Erzeugung einer Amplituden- und ggf. Frequenzmodulation der Lampenspannung.

### Stand der Technik

In der Schrift US 6,184,633 (Kramer) sind die Vorteile dargelegt, die sich ergeben, wenn die Lampenspannung einer Hochdruck-Entladungslampe (im folgenden auch kurz Lampe genannt) einen zeitlichen Verlauf aufweist, der akustische Resonanzen der Lampe ausnützt. Im wesentlichen wird dabei durch eine Amplitudenmodulation der Lampenspannung eine longitudinale Resonanz der Lampe angeregt, welche unerwünschten Entmischungsvorgängen im Plasma der Lampe entgegenwirkt. Auch die Form das Plasmas, wie z.B. Einschnürungen und Begradigung kann gezielt beeinflusst werden. Zusätzlich können durch eine Frequenzmodulation der Lampenspannung andere, von der Amplitudenmodulation nicht betroffene Resonanzen unterdrückt oder nur sporadisch angeregt werden. In der o. g. Schrift werden die angesprochenen Effekte beschrieben, es findet sich aber kein Hinweis darauf, wie die geforderte Kurvenform der Lampenspannung kostengünstig erzeugt wird. Für Forschungszwecke stehen zur Erzeugung von komplexen Spannungskurvenformen Funktionsgeneratoren und Leistungsverstärker zur Verfügung. Derartige Komponenten sind jedoch für einen Anwender von in Rede stehenden Lampen nicht praktikabel und aus Kostengründen nicht tragbar. Vielmehr muss im Sinne einer kommerziellen Anwendung ein Betriebsgerät bereitgestellt werden, das zusammen mit der Lampe ein kostengünstiges Beleuchtungssystem darstellt.

### Darstellung der Erfindung

Es ist Aufgabe der vorliegenden Erfindung, ein Beleuchtungssystem gemäß dem Oberbegriff des Anspruchs 1 bereitzustellen, das mit geringem Aufwand eine Amplitudenmodulation und ggf. auch eine Frequenzmodulation des Lampenstromes bewerkstelligt.

Diese Aufgabe wird bezüglich der Amplitudenmodulation durch ein Betriebsgerät mit den Merkmalen des Oberbegriffs des Anspruchs 1 durch die Merkmale des kennzeichnenden Teils des Anspruchs 1 gelöst. Besonders vorteilhafte Ausgestaltungen, wie die Einbeziehung der Frequenzmodulation finden sich in den abhängigen Ansprüchen. ,

Zum herkömmlichen Betrieb (ohne Modulation) von Hochdruck-Entladungslampen ist folgende Anordnung verbreitet: Aus einer speisenden Energiequelle, die beispielsweise in Form einer Batterie oder einer aufbereiteten Netzspannung vorliegt, erzeugt eine getaktete Gleichspannungsversorgung eine auf ein Massepotenzial bezogene Betriebsspannung. Die Gleichspannungsversorgung wird mit einer Konverterfrequenz getaktet, die lediglich auf die Belange der Gleichspannungsversorgung hin ausgewählt wird. Dabei spielen Verlustleistung, Kosten und geometrische Abmessungen der Gleichspannungsversorgung eine Rolle. Die Betriebsspannung ist im Stand der Technik im wesentlichen eine Gleichspannung. Da die in Rede stehenden Lampen in der Regel nur an einer Wechselspannung betreibbar sind, speist die Betriebsspannung einen Wechselrichter, an dessen Ausgangsklemmen eine Lampenspannung abgegriffen werden kann, die im wesentlichen eine Wechselspannung mit einer Wechselrichterfrequenz ist.

Erfindungsgemäß hat die Betriebsspannung nicht nur einen Gleichanteil, sondern auch einen Wechselanteil. Dieser Wechselanteil bewirkt eine Amplitudenmodulation der Lampenspannung. Das Verhältnis der Amplitude des Wechselanteils zum Betrag des Gleichanteils definiert einen Modulationsgrad. Dieser soll größer als 10 % sein, damit eine gewünschte Resonanz in der Lampe angeregt werden kann.

Für die Amplitudenmodulation wird die getaktete Gleichspannungsversorgung verwendet. Vorteilhaft wird dadurch keine separate Einrichtung für die Modulation benötigt. Erfindungsgemäß wird die Konverterfrequenz so gewählt, dass sie bei einer gewünschten akustischen Resonanz der Lampe oder einem n-fachen davon liegt, wobei n eine natürliche Zahl außer der Null ist. Damit wird eine Amplitudenmodulation der Betriebsspannung bei einer akustischen Resonanzfrequenz oder deren Oberschwingung ohne zusätzlichen Schaltungsaufwand erreicht. Ob die Grundschwingung oder eine Oberschwingung angeregt wird hängt von der gewünschten Verformung des Plasmas ab. Bei Versuchen hat sich gezeigt, dass zur Anregung longitudinaler Resonanzen für n bevorzugt 2 gewählt werden muss, um eine Entmischung des Plasmas zu vermeiden.

In vielen Fällen wird das Beleuchtungssystem an einer Netzspannung als speisende Energiequelle betrieben, deren Amplitude größer ist, als die Lampenspannung einer angeschlossenen Lampe. Deshalb wird die getaktete Gleichspannungsversorgung meist durch einen Tiefsetzer realisiert. Liefert die speisende Energiequelle eine Spannung, die unterhalb der Lampenspannung liegt, so wird entsprechend ein Hochsetzer eingesetzt. Der Mittelwert der Betriebsspannung und damit deren Gleichanteil, welche ein Tiefsetzer bereitstellt, ist bekanntermaßen abhängig von einem Tastverhältnis, mit dem der Tiefsetzschalter geschaltet wird. Im allgemeinen liegt die Betriebsspannung, die der Tiefsetzer bereitstellt an einem Speicherkondensator an, der in Serie zu einer Tiefsetzerdrossel geschaltet ist. Die Konverterfrequenz, mit der der Tiefsetzschalter geschaltet wird, liegt dabei nach einer Dimensionierung, die dem Stand der Technik entspricht, wesentlich über der Resonanzfrequenz, die die Serienschaltung aus Speicherkondensator und Tiefsetzerdrossel aufweist. Eine derartige Dimensionierung wird dann angestrebt, wenn der Wechselanteil der Betriebsspannung möglichst gering sein soll. Erfindungsgemäß soll jedoch durch den Wechselanteil der Betriebsspannung eine Amplitudenmodulation bewerkstelligt werden, weshalb erfindungsgemäß eine Dimensionierung von Tiefsetzdrossel und Speicherkondensator gewählt wird, die eine AM-Resonanz bei der Konverterfrequenz ermöglicht.

Ein AM-Resonanzkreis, der die AM-Resonanz ausbildet setzt sich aus einer Quellimpedanz der getakteten Gleichstromversorgung und einer angeschlossenen Lastimpedanz zusammen. Beim o.g. Tiefsetzer wird die Quellimpedanz im wesentlichen durch die Tiefsetzerdrossel und dem in Serie geschalteten Speicherkondensator gebildet. Dem Speicherkondensator ist die Lastimpedanz parallel geschaltet. Kapazitive Anteile der Lastimpedanz addieren sich dabei zum Wert des Speicherkondensators. Gedämpft wird der AM-Resonanzkreis im wesentlichen durch den resistiven Anteil der Lastimpedanz, den hauptsächlich die Lampe darstellt. Über die Güte des AM-Resonanzkreises kann der Modulationsgrad der Amplitudenmodulation der Betriebsspannung eingestellt werden.

Die speisende Energiequelle liefert eine Speisespannung, deren Wert vorteilhaft auch zum Einstellen des Modulationsgrads der Amplitudenmodulation verwendet werden kann. Das Verhaltnis des Werts der Speisespannung zum Wert der Betriebsspannung legt das oben genannte Tastverhältnis fest. Das Tastverhältnis wiederum hat Einfluß auf den Modulationsgrad. Bei einem Tastverhältnis von 1:1 tritt der maximale Modulationgrad auf, dessen theoretische Grenze bei 100% liegt. Wird die getaktete Gleichspannungsversorgung durch einen Tiefsetzer realisiert und soll ein möglichst großer Modulationsgrad erreicht werden, so ist die Speisespannung doppelt so groß wie die Betriebsspannung zu wählen. Soll der Modulationsgrad reduziert werden, so ist von diesem Verhältnis in eine beliebige Richtung abzuweichen.

Durch geeignete Mittel besteht auch die Möglichkeit den Modulationsgrad zu regeln. Die Information über einen Ist-Wert des Modulationsgrads steckt im Wechselspannungsanteil der Betriebsspannung. Dieser kann aus der Betriebsspannung mittels eines Hochpasses gewonnen werden. Im einfachsten Fall kann der Hochpass aus einem Kondensator bestehen. Nach einem Vergleich des Ist-Werts mit einem Soll-Wert, kann mittels eines Reglers der Wert der Speisespannung derart eingestellt werden, dass der gewünschte Soll-Wert für den Modulationsgrad erreicht wird.

Nach der o.g. Schrift US 6,184,633 (Kramer) wird eine Amplitudenmodulations-Frequenz benötigt, die beispielsweise zwischen 20kHz und 30kHz, bevorzugt bei 24,5kHz liegt.

Weiterhin ist erfindungsgemäß die Wechselrichterfrequenz nicht konstant. Vielmehr wird durch Modulation der Wechselrichterfrequenz eine Frequenzmodulation der Lampenspannung erreicht, wie sie in der o.g. Schrift US 6,184,633 (Kramer) gefordert wird. Damit wird eine gleichzeitige Amplituden- und Frequenzmodulation mit geringem Aufwand bewerkstelligt.

Die Frequenzmodulation wird erfindungsgemäß dadurch erreicht, dass die Wechselrichterfrequenz entsprechend der geforderten Frequenzmodulation variiert wird. Bevorzugt wird der Wechselrichter als Halbbrücke ausgeführt. Die Halbbrücke besteht im wesentlichen aus einem oberen und einem unteren Halbbrückenschalter, die in Serie geschaltet sind und mit der Wechselrichterfrequenz abwechseln angesteuert werden. Der obere Halbbrückenschalter ist mit der Betriebsspannung, der untere Halbbrückenschalter mit dem Massepotenzial gekoppelt. Dadurch entsteht am Verbindungspunkt der Halbbrückenschalter eine rechteckförmige Halbbrückenspannung, deren Amplitude gleich der halben Betriebsspannung und deren Frequenz die Wechselrichterfrequenz ist.

Bevorzugt wird die Wechselrichterfrequenz von einem sog. Voltage Controlled O-scillator (VCO) erzeugt. Der VCO steuert eine Ansteuerschaltung, die Ansteuersignale für die Halbbrückenschalter bereit stellt. Der VCO gibt an seinem Ausgang eine Wechselrichterfrequenz ab, die proportional einer VCO-Steuerspannung am Eingang des VCO ist. Die VCO-Steuerspannung ist bevorzugt periodisch und weist eine Frequenzmodulations-Frequenz auf. Bei bekannten Lampen, die sich für den Betrieb in einem erfindungsgemäßen Beleuchtungssystem eignen, liegt die Frequenzmodulations-Frequenz bevorzugt bei ca. 100Hz. Der untere Wert der momentanen Wechselrichterfrequenz liegt bei derartigen Lampen bei ca. 40kHz, der obere Wert bei 60kHz. Dadurch wird ein Frequenzhub von 20kHz definiert.

Es hat sich herausgestellt, dass ein sägezahnförmiger Verlauf der Modulation der Wechselrichterfrequenz für den Lampenbetrieb besonders günstig ist. Erfindungsgemäß wird deshalb der VCO an seinem Eingang von einem Sägezahngenerator angesteuert, der eine sägezahnförmige Sägezahnspannung mit der Frequenzmodulations-Frequenz abgibt.

Anstatt des VCOs und des Sägezahngenerators kann auch ein Mikrocontroller wirkungsgleich eingesetzt werden. Die beschriebenen Signalformen werden dann durch eine entsprechende Software im Mikrokontroller realisiert.

Oft ist es wünschenswert, dass die Lampe nicht mit einer rechteckförmigen, sondern mit einer sinusförmigen Lampenspannung betrieben wird. Deshalb wird die rechteckförmige Halbbrückenspannung vorteilhaft in die Serienschaltung einer Filterdrossel und eines Filterkondensators eingespeist. Über einen Koppelkondensator wird die Lampe mittels Ausgangsklemmen mit dem Filterkondensator gekoppelt. Der Koppelkondensator hat die Aufgabe, den Gleichanteil der Halbbrückenspannung zu unterdrücken. Die Filterdrossel und der Filterkondensator bilden einen Serienresonanzkreis dessen Resonanzfrequenz vorteilhaft in der Größenordnung der Wechselrichterfrequenz liegt. Damit wird eine sinusförmige Spannung an der Lampe erzielt. Eine Resonanzüberhöhung, die sich für die Spannung am Filterkondensator ergibt, kann für die Zündung der Lampe und für eine Anhebung der Lampenspannung ausgenutzt werden.

### Kurze Beschreibung der Zeichnungen

Im folgenden soll die Erfindung anhand eines Ausführungsbeispiels unter Bezugnahme auf Zeichnungen näher erläutert werden. Es zeigen:
- Figur 1: den erfindungsgemäßen zeitlichen Verlauf einer Lampenspannung,
- Figur 2: ein Blockdiagramm eines erfindungsgemäßen Beleuchtungssystems.
- Figur 3: ein Blockdiagramm eines weiteren erfindungsgemäßen Beleuchtungssystems.

Im folgenden werden Schalter durch den Buchstaben S, Dioden durch den Buchstaben D, Drosseln durch den Buchstaben L, Kondensatoren durch den Buchstaben C, Spannungen durch den Buchstaben U, Anschlussklemmen durch den Buchstaben J jeweils gefolgt von einer Zahl bezeichnet.

Im folgenden werden für gleiche und gleichwirkende Elemente der verschiedenen Figuren durchweg gleiche Bezugszeichen verwendet.

### Bevorzugte Ausführung der Erfindung

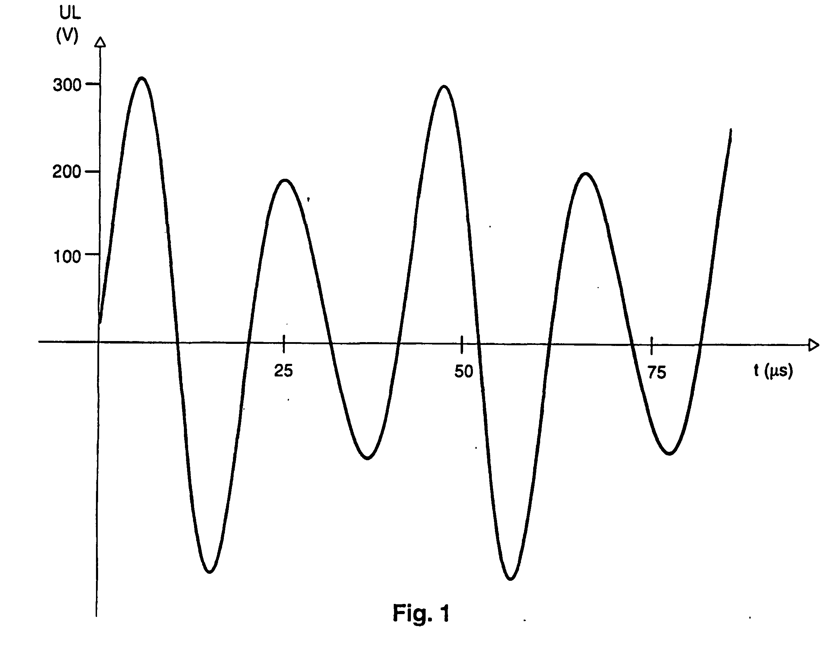

In Figur 1 ist der erfindungsgemäße zeitliche Verlauf einer Lampenspannung dargestellt. Es handelt sich um den typischen Verlauf der Lampenspannung für eine 70W Lampe mit einem Effektivwert der Lampenspannung von ca. 180V. Auf der Abszisse ist die Zeit t in Mikrosekunden (µs) und auf der Ordinate die Lampenspannung UL in Volt (V) dargestellt. Im wesentlichen ist die Kurvenform sinusförmig, was durch eine Filterdrossel und einen Filterkondensator erreicht werden kann. Die Frequenz der dargestellten Lampenspannung, die der Wechselrichterfrequenz entspricht, beträgt ca. 50kHz. Eine Frequenzmodulation wird im dargestellten Zeitfenster nicht sichtbar, da die Frequenzmodulations-Frequenz bevorzugt im 100Hz Bereich liegt. Im dargestellten Zeitfenster von 100µs ändert sich im dargestellten Beispiel die Wechselrichterfrequenz um ca. 100Hz. Entsprechend ändert sich die Periodendauer der Wechselrichterfrequenz um ca.0,04µs.

Deutlich sichtbar ist in Figur 1 die Amplitudenmodulation. Da im gewählten Beispiel die Wechselrichterfrequenz ca. doppelt so groß ist wie die Konverterfrequenz, ist jedes zweite Maximum des sinusförmigen Verlaufs der Lampenspannung UL abgesenkt. Der Modulationsgrad der dargestellten Amplitudenmodulation beträgt ca. 25%.

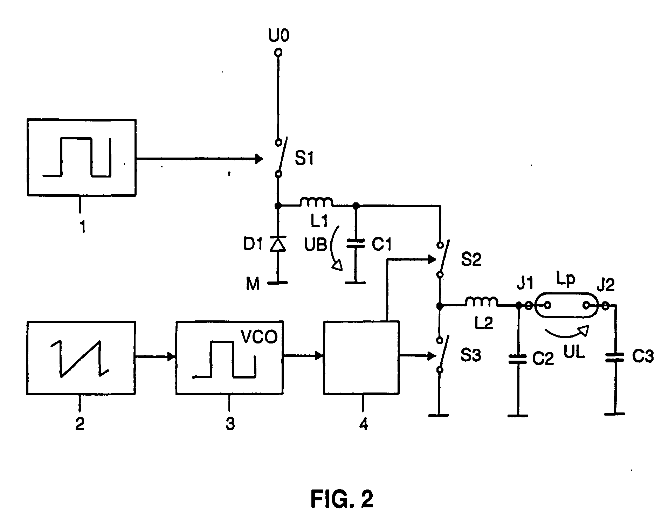

In Figur 2 ist ein Blockdiagramm einer bevorzugten Ausführung eines erfindungsgemäßen Beleuchtungssystems dargestellt. Diese Ausführung ist mit besonders geringem Aufwand zu realisieren.

Einem Tiefsetzer, der im wesentlichen aus den Komponenten Tiefsetzschalter S1, Diode D1, Tiefsetzdrossel L1, Speicherkondensator C1 und Rechteckgenerator 1 besteht, wird zwischen einem Potenzial U0 und dem Massepotenzial M aus einer speisenden Energiequelle eine Versorgungsspannung eingespeist. Der Tiefsetzer realisiert die o.g. getaktete Gleichspannungsquelle. S1 und D1 sind in Serie zwischen dem Potenzial U0 und dem Massepotenzial geschaltet. S 1 ist in der Regel als Halbleiterschalter, insbesondere als MOSFET oder IGBT ausgeführt. Er wird gesteuert vom Rechteckgenerator 1. Parallel zu D1 liegt die Serienschaltung aus L1 und C1, wobei C1 mit dem Massepotenzial M verbunden ist. An C1 wird eine Betriebsspannung UB erzeugt, die einen nachgeschalteten Wechselrichter speist. Der Rechteckgenerator 1 gibt eine Rechteckspannung mit der Konverterfrequenz aus. Das Tastverhältnis der Rechteckspannung des Rechteckgenerators 1 bleibt in diesem Ausführungsbeispiel konstant und legt den Gleichanteil der Betriebsspannung UB fest.

Der Wechselrichter wird im Kern erfindungsgemäß durch eine Halbbrücke realisiert. Die Serienschaltung eines oberen Halbbrückenschalters S2 und eines unteren Halbbrückenschalters S3 ist parallel zur Betriebsspannung UB geschaltet. S2 und S3 sind in der Regel als Halbleiterschalter, insbesondere als MOSFET oder IGBT ausgeführt. Zur Ansteuerung der Halbbrückenschalter S2 und S3 wir zunächst ein Sägezahn Generator 2 bereitgestellt. Er liefert eine sägezahnförmige Spannung, die den Verlauf der Wechselrichterfrequenz festlegt. Die Frequenz der sägezahnförmigen Spannung bestimmt die Frequenzmodulations-Frequenz, die Amplitude der sägezahnförmigen Spannung bestimmt den Frequenzhub der Lampenspannung UL. Die sägezahnförmige Spannung steuert einen VCO 3, der an eine Ansteuerschaltung 4 eine rechteckförmige Spannung abgibt, deren Frequenz proportional der sägezahnförmigen Spannung ist. Die Ansteuerschaltung 4 stellt Ansteuersignale für die Halbbrückenschalter S2 und S3 bereit, wodurch diese im Takt der Wechselrichterfrequenz ein- und ausgeschaltet werden. Auf diese Weise folgt die Wechselrichterfrequenz dem Verlauf der sägezahnförmigen Spannung. Am Verbindungspunkt der Halbbrückenschalter S2 und S3 kann somit erfindungsgemäß bezüglich des Massepotenzials M eine amplituden- und frequenzmodulierte rechteckförmige Spannung abgegriffen werden. Diese wird in die Serienschaltung aus einer Filterdrossel L2 und einem Filterkondensator C2 eingespeist. Die Resonanzfrequenz dieser Serienschaltung liegt in der Größenordnung der Wechselrichterfrequenz, wodurch an C2 eine näherungsweise sinusförmige Spannung erzeugt wird. Parallel zu C2 ist die Serienschaltung aus einer Lampe Lp und einem Koppelkondensator C3 geschaltet. C3 hat die Aufgabe den Gleichanteil der vom Wechselrichter gelieferten Spannung zu unterdrücken. Die Lampe Lp wird über die Anschlussklemmen J1 und J2 angeschlossen. Über der Lampe Lp liegt die Lampenspannung UL an.

Die Quellimpedanz des Tiefsetzers wird im wesentlichen durch die Tiefsetzdrossel L1 und den Speicherkondensator C1 gebildet. Die Lastimpedanz wird im wesentlichen durch die Lampe Lp repräsentiert. Quellimpedanz und Lastimpedanz bilden zusammen einen AM-Resonanzkreis, der eine AM-Resonanz ausbildet. Erfindungsgemäß liegt die AM-Resonanz bei der Konverterfrequenz. Im dargestellten Beispiel sind L2, C2 und C3 zwar Bestandteile der Lastimpedanz, beeinflussen die AM-Resonanz jedoch nicht wesentlich.

Über die Güte des AM-Resonanzkreises kann die Amplitude des Wechselanteils der Betriebsspannung UB eingestellt werden. Das Verhältnis der Amplitude des Wechselanteils zum Gleichanteil legt erfindungsgemäß den Modulationsgrad der gewünschten Amplitudenmodulation der Lampenspannung UL fest.

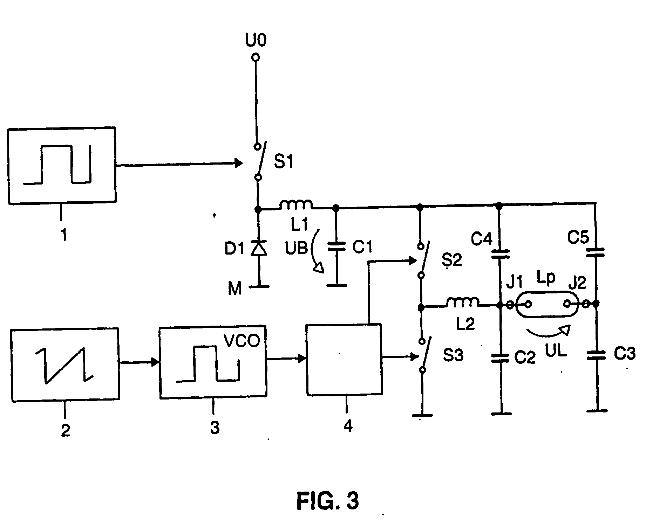

In Figur 3 ist ein weiteres Ausführungsbeispiel des erfindungsgemäßen Beleuchtungssystems dargestellt. Im Vergleich zu Figur 2 sind die Kondensatoren C4 und C5 hinzugefügt. Damit wird die Schaltung des Wechselrichters symmetrisiert. Von der Anschlussklemme J1 geht nicht nur der Filterkondensator C2 zum Massepotenzial M, sondern ein weiterer Filterkondensator C4 zum Betriebsspannungspotenzial UB. Die Werte der Kapazitäten von C2 und C4 sind gleich. In gleicher Weise geht von der Anschlussklemme J2 nicht nur der Koppelkondensator C3 zum Massepotenzial M sondern ein weiterer Koppelkondensator C5 zum Betriebsspannungspotenzial UB. Die Werte der Kapazitäten von C3 und C5 sind gleich. Durch die beschriebene Symmetrisierung wird erreicht, dass die Lampenspannung UL bezüglich des Massepotenzials M symmetrisch verläuft. Es hat sich gezeigt, dass dadurch die Ausbildung gewünschter akustischer Resonanzen der Lampe begünstigt wird.

Die in Figur 3 dargestellte Symmetrisierung des Wechselrichters kann auch auf die Filterkondensatoren C2, C4 oder die Koppelkondensatoren C3, C5 beschränkt sein. Auch kann bei unsymmetrischer Ausführung nur der Kondensator vorhanden sein, der mit dem Betriebsspannungspotenzial UB verbunden ist. Allgemein ausgedrückt muss von den beiden Kondensatorenpaaren C2, C4 und C3, C5 jeweils mindestens ein Kondensator vorhanden sein.

Eine weitere Variationsmöglichkeit besteht für den Fall, dass der Koppelkondensator symmetrisch ausgeführt ist, d. h. C3 und C5 vorhanden sind. Wie der Figur 3 zu entnehmen ist, ist die Serienschaltung aus C3 und C5 dem Speicherkondensator C1 parallel geschaltet. Die Werte der Kapazitäten von C3 und C5 können nun so gewählt werden, dass C3 und C5 die Funktion von C1 mit übernehmen können und somit C1 entfallen kann. Im wesentlichen besteht dann die Quellimpedanz nur noch aus der Tiefsetzerdrossel L1 und die Lastimpedanz aus der Lampe Lp und den Koppelkondensatoren C3 und C5. Für die AM-Resonanz sind die Filterdrossel L2 und die Filterkondensatoren C2 und C4 in der Regel vernachlässigbar.

## Patentansprüche

1. Beleuchtungssystem mit folgenden Merkmalen:
• eine Gleichspannungsversorgung, die mit einer Konverterfrequenz getaktet wird und eine Betriebsspannung (UB) liefert,
• ein Wechselrichter, der von der Betriebsspannung (UB) gespeist wird und Ausgangsklemmen (J1, J2) besitzt, an denen eine Lampenspannung (UL) anliegt,
• eine Hochdruck-Entladungslampe, die mit den Ausgangsklemmen (J1, J2) gekoppelt ist, und mindestens eine akustische Resonanzfrequenz aufweist,
**dadurch gekennzeichnet, dass** die Konverterfrequenz beim n-fachen einer akustischen Resonanzfrequenz liegt, wobei n eine natürliche Zahl außer der Null ist.

2. Beleuchtungssystem gemäß Anspruch 1, **dadurch gekennzeichnet, dass** es sich bei der akustischen Resonanz um eine longitudinale Resonanz handelt und n gleich 2 ist.

3. Beleuchtungssystem gemäß Anspruch 1 oder 2, **dadurch gekennzeichnet, dass** es sich bei der getakteten Gieichspannungsversorgung um einen Tiefsetzer mit einem Tiefsetzschalter handelt, der eine Betriebsspannung (UB) liefert, die abhängig ist von einem Tastverhältnis des Tiefsetzschalters (S1), wobei der Gleichanteil der Betriebsspannung (UB) durch Variation des Tastverhältnisses bestimmt wird.

4. Beleuchtungssystem gemäß Anspruch 1 oder 2, **dadurch gekennzeichnet, dass** es sich bei der getakteten Gleichspannungsversorgung um einen Hochsetzer mit einem Hochsetzschalter handelt, der eine Betriebsspannung (UB) liefert, die abhängig ist von einem Tastverhältnis des Hochsetzschalters (S 1), wobei der Gleichanteil der Betriebsspannung (UB) durch Variation des Tastverhältnisses bestimmt wird.

5. Beleuchtungssystem gemäß einem der vorigen Ansprüche , **dadurch gekennzeichnet, dass** die getaktete Gleichspannungsversorgung eine Quellimpedanz aufweist, die zusammen mit der angeschlossenen Lastimpedanz, welche vom Wechselrichter und der Lampe gebildet wird, eine AM-Resonanz aufweist, die bei der Konverterfrequenz liegt.

6. Beleuchtungssystem gemäß einem der vorigen Ansprüche, **dadurch gekennzeichnet, dass** der Wechselrichter als Halbbrücke ausgeführt ist, wobei ein oberer und ein unterer Halbbrückenschalter (S2, S3) abwechselnd mit einer Wechselrichterfrequenz ein- und ausgeschaltet werden.

7. Beleuchtungssystem nach Anspruch 6, **dadurch gekennzeichnet, dass** die Wechselrichterfrequenz moduliert ist.

8. Beleuchtungssystem nach Anspruch 7, **dadurch gekennzeichnet, dass** ein Sägezahngenerator (2) eine Sägezahnspannung abgibt, die einem VCO (3) zugeführt wird, welcher eine mit dem Verlauf der Sägezahnspannung modulierte Wechselrichterfrequenz erzeugt, mit der die Halbbrückenschalter (S2, S3) angesteuert werden.

9. Beleuchtungssystem gemäß einem der vorigen Ansprüche, **dadurch gekennzeichnet, dass** die Konverterfrequenz zwischen 20kHz und 30 kHz und die Wechselrichterfrequenz zwischen 40kHz und 60kHz liegt.

10. Beleuchtungssystem gemäß einem der vorigen Ansprüche, **dadurch gekennzeichnet, dass** die Gleichspannungsversorgung ihre Energie aus einer Speisespannung bezieht, wobei Mittel bereitgestellt werden, die den Wert der Speisespannung derart regeln, dass die Betriebsspannung einen gewünschten Amplituden-Modulationsgrad aufweist.

## Claims

1. Lighting system having the following features:
• a d.c. voltage supply which is clocked at a converter frequency and supplies an operating voltage (UB),
• an inverter which is fed by the operating voltage (UB) and has output terminals (J1, J2) at which a lamp voltage (U1) is present,
• a high-pressure discharge lamp which is connected to the output terminals (J1, J2) and has at least one acoustic resonant frequency,
**characterized in that** the converter frequency is an n-fold multiple of an acoustic resonant frequency, where n is a natural number other than zero.

2. Lighting system according to Claim 1, **characterized in that** the acoustic resonance is a longitudinal resonance and n is equal to 2.

3. Lighting system according to Claim 1 or 2, **characterized in that** the clocked d.c. voltage supply is a step-down converter having a step-down switch which supplies an operating voltage (UB) which is dependent on a pulse duty factor of the step-down switch (S1), the d.c. component of the operating voltage (UB) being determined by varying the pulse duty factor.

4. Lighting system according to Claim 1 or 2, **characterized in that** the clocked d.c. voltage supply is a step-up converter having a step-up switch which supplies an operating voltage (UB) which is dependent on a pulse duty factor of the step-up switch (S1), the d.c. component of the operating voltage (UB) being determined by varying the pulse duty factor.

5. Lighting system according to one of the preceding claims, **characterized in that** the clocked d.c. voltage supply has a source impedance which, together with the connected load impedance which is formed by the inverter and the lamp, has AM resonance which is equal to the converter frequency.

6. Lighting system according to one of the preceding claims, **characterized in that** the inverter is designed as a half-bridge, in which case an upper and a lower half-bridge switch (S2, S3) are switched alternately on and off at an inverter frequency.

7. Lighting system according to Claim 6, **characterized in that** the inverter frequency is modulated.

8. Lighting system according to Claim 7, **characterized in that** a saw-tooth voltage generator (2) emits a saw-tooth voltage which is fed to a VCO (3) which generates an inverter frequency modulated by the characteristic of the saw-tooth voltage and by means of which the half-bridge switches (S2, S3) are driven.

9. Lighting system according to one of the preceding claims, **characterized in that** the converter frequency is between 20 kHz and 30 kHz and the inverter frequency is between 40 kHz and 60 kHz.

10. Lighting system according to one of the preceding claims, **characterized in that** the d.c. voltage supply draws its energy from a feed voltage, means being provided to control the value of the feed voltage such that the operating voltage has a desired degree of amplitude modulation.

## Revendications

1. Système d'éclairage ayant des caractéristiques suivantes :
• une alimentation en tension continue qui est cadencée à une fréquence de convertisseur et qui fournit une tension (UB) de fonctionnement ;
• un onduleur qui est alimenté par la tension (UB) de fonctionnement et qui a des bornes (J1, J2) de sortie auxquelles est appliquée une tension (UL) de lampe ;
• une lampe à décharge à haute pression qui est couplée aux bornes (J1, J2) de sortie et qui a au moins une fréquence de résonance acoustique ;
**caractérisé en ce que** la fréquence du convertisseur est égale à n fois une fréquence de résonance acoustique, n étant un nombre naturel autre que zéro.

2. Système d'éclairage suivant la revendication 1, **caractérisé en ce qu'**il s'agit pour la résonance acoustique d'une résonance longitudinale et n est égal à 2.

3. Système d'éclairage suivant la revendication 1 ou 2, **caractérisé en ce qu'**il s'agit pour l'alimentation en tension continue cadencée d'un dévolteur ayant un interrupteur de dévoltage qui fournit une tension (UB) de fonctionnement qui dépend d'un rapport de cycle de l'interrupteur (S1) de dévoltage, la partie continue de la tension (UB) de fonctionnement étant déterminée par la variation du rapport de cycle.

4. Système d'éclairage suivant la revendication 1 ou 2, **caractérisé en ce qu'**il s'agit pour l'alimentation en tension continue cadencée d'un survolteur ayant un interrupteur de survoltage qui fournit une tension (UB) de fonctionnement qui dépend d'un rapport de cycle de l'interrupteur (S1) de survoltage, la partie continue de la tension (UB) de fonctionnement étant déterminée par la variation du rapport de cycle.

5. Système d'éclairage suivant l'une revendications précédentes, **caractérisé en ce que** l'alimentation en tension continue cadencée a une impédance de source qui ensemble avec l'impédance de charge raccordée qui est formée par l'onduleur et la lampe présente une résonance à modulation d'amplitude.

6. Système d'éclairage suivant l'une revendications précédentes, **caractérisé en ce que** l'onduleur est réalisé en demi-pont, un interrupteur en demi-pont supérieur et inférieur (S2, S3) étant fermé ou ouvert en alternance à une fréquence d'onduleur.

7. Système d'éclairage suivant la revendication 6, **caractérisé en ce que** la fréquence d'onduleur est modulée.

8. Système d'éclairage suivant la revendication 7, **caractérisé en ce qu'**un générateur (2) de dents de scie émet une tension en dent de scie qui est envoyée à un VCO (3), lequel produit une fréquence d'onduleur modulée par la courbe de la tension en dent de scie, fréquence à laquelle les interrupteurs (S2, S3) en demi-pont sont commandés.

9. Système d'éclairage suivant l'une revendications précédentes, **caractérisé en ce que** la fréquence du convertisseur est comprise entre 20 kHz et 30 kHz et la fréquence de l'onduleur entre 40 kHz et 60 kHz.

10. Système d'éclairage suivant l'une revendications précédentes, **caractérisé en ce que** l'alimentation en tension continue se procure son énergie d'une tension d'alimentation avec mise à disposition de moyens qui règlent la valeur de la tension d'alimentation de façon à ce que la tension de fonctionnement ait un degré souhaité de modulation d'amplitude.
